Europäisches Patentamt

European Patent Office

Office européen des brevets

(11) Veröffentlichungsnummer: **0 370 316 B1**

(12) **EUROPÄISCHE PATENTSCHRIFT**

(45) Veröffentlichungstag der Patentschrift: 04.01.95

(51) Int. Cl.6: **C09K 5/00**

(21) Anmeldenummer: **89120762.3**

(22) Anmeldetag: **09.11.89**

(54) **Kälteträgeröl auf Siloxanbasis.**

(30) Priorität: **22.11.88 DE 3839333**

(43) Veröffentlichungstag der Anmeldung:
**30.05.90 Patentblatt 90/22**

(45) Bekanntmachung des Hinweises auf die
Patenterteilung:
**04.01.95 Patentblatt 95/01**

(84) Benannte Vertragsstaaten:
**AT BE CH DE ES FR GB GR IT LI NL SE**

(56) Entgegenhaltungen:
FR-A- 2 373 597
US-A- 2 468 869

**SOVIET INVENTIONS ILLUSTRATED, Woche
E02, Sektion Chemical, 3. März 1982, Zusammenfassung Nr. H4567 B03, Derwent Publications Ltd, London, GB; & SU-A-902 426**

**DERWENT JAPANESE PATENTS REPORT,
Sektion Chemical, Band 4, Nr. 85 (C-15)[567],
18. Juni 1980, Seite 3; & JP-A-61 157 587**

(73) Patentinhaber: **BAYER AG**

**D-51368 Leverkusen (DE)**

(72) Erfinder: **Endres, Robert, Dr.
Kalmüntener Strasse 8
D-5060 Bergisch Gladbach 2 (DE)**
Erfinder: **Steinbach, Hans-Horst, Dr.
Weyerstrasse 4
D-5253 Lindlar (DE)**

EP 0 370 316 B1

## Beschreibung

Die vorliegende Patentanmeldung betrifft ein Kälteträgeröl, daß aus Siloxanen besteht und für den Tieftemperatureinsatz bis -140° C geeignet ist. Zwar ist bekannt, daß Siliconöle für Kältemischungen eingesetzt werden können, wenn man Öle mit einer Viskosität zwischen 5 und 20 $mm^2$ /s, bei 20° C gemessen, verwendet (W. Simmler, "G-I-T Fachzeitschrift für das Laboratorium", 6, 101, 189, 278 -1962-). Da die Anwendung statischer Natur ist, spielt es hierbei keine Rolle, daß die Viskosität bei tiefen Temperaturen bereits relativ hoch ist.

Einerseits werden bisher als niedrigviskose Kälteträger bei tiefen Temperaturen die Kältemittel des Kältemaschinenkreislaufes selbst verwendet (Halogenkohlenstoff- und Halogenkohlenwasserstoffverbindungen wie z.B. $R^{11}$, $R^{12}$, $R^{22}$ und $R^{502}$), andererseits je nach Temperaturbereich wäßrige Lösungen von Alkoholen (Methanol, Ethylen- und Propylenglykol) und von Salzen (Calciumchlorid, Soda etc.) eingesetzt. Die Nachteile dieser Kälteträger sind hinreichend bekannt: niedere Alkohole erfordern wegen des tiefen Flammpunktes aufwendige Sicherheitsmaßnahmen und sind z.T. toxisch, wäßrige Salzlösungen sind stark korrosiv und haben bei tiefen Temperaturen eine zu hohe Viskosität. Schließlich sind die Halogenkohlenstoff- und Halogenkohlenwasserstoffverbindungen für die photochemischen Abbau der Ozonschicht mitverantwortlich und teilweise auch toxisch. Deswegen sind Mischungen von Siliconölen mit Halogenkohlenstoff- und Halogenkohlenwasserstoffverbindungen wie z.B. in der japanischen Patentanmeldung 50/43500 schlechte Kompromisse.

Im folgenden soll der Einfachheit wegen die Nomenklatur für Silicone verwendet werden, wie z.B. beschrieben in W. Noll, Chemie und Technologie der Silicone, 2. Auflage, s. 3 ff (1968). Danach werden die linearen Siloxane Octamethyltrisiloxan $M_2D$ und Decamethyltetrasiloxan $M_2D_2$ benannt, oder die entsprechend höheren Homologen allgemein $M_2D_n$. Die cyclischen Siloxane Octamethylcyclotetrasiloxan und Decamethylcyclopentasiloxan werden mit $D_4$ bzw. $D_5$ abgekürzt, die höheren homologen Cyclosiloxane mit $D_6$, $D_7$ etc..

Die genannten Nachteile sind in Kälteträgern gemäß vorliegender Erfindung behoben. Gegenstand der vorliegenden Erfindung sind salzfreie, alkoholfreie und halogenkohlenwasserstoffreie Kälteträgeröle niedriger Viskosität bei tiefen Temperaturen,
bestehend aus Gemischen von
5-95 Gew.-% linearem Decamethyltetrasiloxan ($M_2D_2$)
und mindestens einer der folgenden Komponenten:
0,1 bis 23 Gew.-% Hexamethyldisiloxan ($M_2$),
0,1 bis 20 Gew.-% Octamethyltrisiloxan ($M_2D$),
0 bis 15 Gew.-% Octamethylcyclotetrasiloxan ($D_4$),
0 bis 50 Gew.-% Decamethylcyclopentasiloxan ($D_5$)
sowie gegebenenfalls Farbstoffen
wobei die Summe der Komponenten des Gemisches 100% beträgt.

Gegenstand der vorliegenden Erfindung ist auch ein Verfahren zur Herstellung der erfindungsgemäßen Kälteöle, wonach dem durch Equilibrierung von Hexamethyldisiloxan und Hydrolyse-A-Öl gewonnenen Gemenge von kurzkettigen $\alpha,\omega$-Bis-(trimethylsiloxy)-dimethylsiloxanen und cyclischen Dimethylsiloxanen ein Teil des Hexamethyldisiloxans durch Destillation entzogen wird und das beanspruchte Siloxangemisch durch fraktionierte Destillation, gegebenenfalls durch weiteren Zusatz der Reinkomponenten, erhalten wird.

Diese kurzkettigen und cyclischen Siloxane gewinnt man in einer sauren Equilibrierungsreaktion von $M_2$ (Hexamethyldisiloxan) mit Siliconöl, das durch Hydrolyse von Dimethyldichlorsilan entstanden ist (A-Öl), im Gewichts-Verhältnis 1:1, wobei in der Regel ein saurer Ionenaustauscher wie z.B. mit Säure aktivierte Bleicherde verwendet wird, Heizt man ein solches Reaktionsprodukt nach Abfiltration des Katalysators aus, so erhält man ein niedrigviskoses Siloxangemisch wie z.B. Baysilone-Öl $M_3$ (Handelsprodukt der Fa. Bayer AG, Leverkusen). Eine Charakterisierung durch GC-Analyse und die Auflistung der entsprechenden Siedepunkte ist in der Tabelle 1 wiedergegeben. Unterwirft man ein solches Produktgemisch einer fraktionierten Destillation, so können die einzelnen Siloxane voneinander getrennt werden, oder das erfindungsgemäß beanspruchte und gewünschte Siloxangemisch kann durch einen entsprechenden Destillationsschnitt gewonnen werden.

Unter diesen diskreten Siloxanen scheint zunächst $M_2D_2$ das Produkt mit den besten Kenndaten für ein Kälteträgeröl zu sein, da es eine niedrige Viskosität bei -40° C und einen Flammpunkt von über 55° C hat. Letzterer ist entscheidend dafür, daß $M_2D_2$ nicht mehr als "entzündlich" nach der Störfallverordnung gilt und daher keine aufwendigen Arbeitssicherheitsmaßnahmen getroffen werden müssen. Allerdings hat reines $M_2D_2$ einen Kristallisationspunkt von -76° C (siehe Tabelle 2), der die Anwendung als Kälteträgermittel stark einschränken würde.

Überraschenderweise wurde nun gefunden, daß Zusätze von $M_2D$ und/oder $D_4$ und/oder $D_5$ den Pour-Point bzw. den Stockpunkt von $M_2D_2$ stark erniedrigen. Die Mischung $M_2D_2/M_2D$ bis zu einem Anteil von 20 Gew.-% $M_2D$ ergibt ein System, das bei -40°C niedrigviskos ist und einen Flammpunkt von über 55°C besitzt. Mischt man mehr $M_2$ zu, so werden die Viskosität und der Stockpunkt/Pour-Point erniedrigt, ebenso auch der Flammpunkt, was jedoch für spezielle industrielle Anwendungen der Tiefkühltechnik interessant sein könnte. Der Stockpunkt (nach DIN 51 556) liegt in der Regel 3 bis 5°C unter dem zugehörigen Pour-Point (nach DIN ISO 3016).

Mischt man $M_2D_2$ oder einem Gemisch aus $M_2D_2$ und $M_2D$ entweder $M_2$ und/oder die cyclischen Siloxane $D_4$ und/oder $D_5$ zu, so sollten im Fall von $D_4$ 15 Gew.-%, im Fall von $D_5$ 50 Gew.-% Zusatz nicht überschritten werden, um Entmischung und Kristallisationstrübung bei tiefen Temperaturen zu vermeiden. Bevorzugt enthält das Kälteträger-öl 5-20 Gew.-% $M_2$. Die Octamethyltrisiloxankonzentration $M_2D$ beträgt vorzugsweise 5-20 Gew.-%. $D_4$ wird bevorzugt zwischen 5 und 15 Gew.-%, $D_5$ zwischen 5 und 20 Gew.-% zugegeben, wobei $D_5$ wegen des besseren Effektes der Pour-Point-bzw. Stockpunkterniedrigung $D_4$ überlegen ist. Die vier Siloxane können, wie die Beispiele der Tabelle 2 und 3 zeigen, erfindungsgemäß so abgemischt werden, daS die Viskosität bei -40°C unter 10 mm$^2$/sec, bevorzugt so niedrig wie möglich und der Flammpunkt über 43°C, bevorzugt über 55°C liegt.

Setzt man statt der erfindungsgemäß beanspruchten diskreten Siloxane entsprechende statistische Gemenge aus $M_2$ und höheren $M_2D_n$-Typen ein (Beispiele der Tabelle 4), wird die Viskosität erhöht und der Flammpunkt erniedrigt, so daß ein solches Kälteträgeröl in der Regel minderwertiger ist. In besonderen Anwendungsfällen, bei denen der niedrige Flammpunkt keine Rolle spielt, können jedoch auch statistische Gemische mit sehr enger Verteilung, wie die Beispiele 17 bis 19 zeigen, interessant sein. Danach kann zu einem Gemisch der Siloxane $M_2D$ und $M_2D_2$ und $D_4$ und/oder $D_5$ $M_2$ bis zu einer Konzentration von 23 Gew.-% zugemischt werden, ohne daß der Flammpunkt unter 21°C sinkt. Ein solches Gemisch gilt dann als "entzündlich", wobei der Sicherheitsaufwand geringer als bei "leicht entzündlichen" Stoffen bzw. Stoffgemengen ist (Flammpunkt unter 21°C).

Gegenstand der vorliegenden Erfindung ist auch die Verwendung der Erfindung Kälteträgeröle zum Kältetransport bis zu Temperaturen von -140°C. Es kommen somit bevorzugte Anwendungen für Tiefkühlhäuser, Tiefkühlmöbel und Tiefkühltruhen in Betracht, aber auch für Erdsonden und andere Wärme-/Kältetransportflüssigkeiten, die im Verbund mit Wärmepumpen stehen und bekanntlich nach dem Entzug der Wärme auf der Verdampferseite der Wärmepumpe beträchtlich abkühlen können. Solche sog. Solesysteme, die bisher auf der Basis von Wasser-/Ethylenglykolgemischen hergestellt wurden, erreichen nicht die tiefen Temperaturen.

Die erfindungsgemäßen Kälteträgeröle haben in diesem Anwendungsfall den Vorteil, daß sie nicht korrosiv wirken und toxikologisch unbedenklich sind. Da ein Gemisch aus $M_2D_2$ und $D_5$ wie im Beispiel Nr. 5 einerseits erst ab -130°C in den festen Aggregatzustand übergeht, andererseits seine Einzelkomponenten erst bei 194°C und 210°C unter Normalbedingungen sieden, ist auch an einen Einsatzbereich mit extremen Temperaturbelastungen zu denken, wie z.B. Autokühlerflüssigkeit oder Transformatorenfüllung in Klimazonen mit starken Temperaturschwankungen.

Die erfindungsgemäß beanspruchten Siloxangemische können angefärbt werden, um mögliche Leckagen sichtbar zu machen. So können z.B. bei Raumtemperatur jeweils 0,01 Gew.-% der folgenden Anthrachinonfarbstoffe eingerührt werden:
Anthrachinon
1-Aminoanthrachinon
1,4-Bis-isobutylamino-anthrachinon
1-(3-Dimethylaminopropylamino)-4-methylamino-anthrachinon
1-(4-Methyl-phenylamino)-anthrachinon
1,4-Bis-(2,6-diethyl-4-methyl-phenyl-amino)-anthrachinon
1,4-Bis-(4-tert.-butyl-phenyl-amino)-anthrachinon
1-Methylamino-4-(3-methyl-phenylamino)-anthrachinon
1-Methylamino-4-(4-methyl-phenylamino)-anthrachinon
1-(3-dimethylaminopropylamino)-4-(4-methyl-phenylamino)-anthrachinon.

Außerdem können bis ca 0,002 Gew.-% der folgenden Naturfarbstoffe zum Einfärben verwendet werden:
Ceresrot 7 B
Ceresgelb CRN
Cochnillarot
Ceresblau GN.

Die Beispiele der Tabellen 2 und 3 sollen die vorliegende Erfindung veranschaulichen. Außerdem zeigt Tabelle 2 die Kenndaten der dazugehörigen Reinsubstanzen. Die Siloxane der Tabelle 4 sind Gemische statistischer Siloxane und zeigen entweder eine höhere Tieftemperaturviskosität oder einen niedrigeren Flammpunkt an als die entsprechenden Gemische diskreter Siloxane, die erfindungsgemäß beansprucht werden.

**Tabelle 1: GC-Analyse von Baysilon-1 $M_3$ und physikalische Kennwerte**

| Komponente | Flächen-% | Ret. Zeit (min) | $K_p$ (mm Hg) *) (°C) |
|---|---|---|---|
| $M_2$ | 0,4 | 3,56 | 110,1 (757) |
| $M_2D$ | 4,0 | 6,53 | 151,7 (747) |
| $D_4$ | 0,4 | 8,36 | 175 (760) |
| $M_2D_2$ | 16,7 | 9,53 | 194 (760) |
| $D_5$ | 0,5 | 10,87 | 210 (760) |
| $M_2D_3$ | 23,2 | 12,17 | 229 (760) |
| $D_6$ | 0,1 | 13,41 | 245 (760) |
| $M_2D_4$ | 18,8 | 14,49 | 184,2 (101) |
| $M_2D_5$ | 12,9 | 16,54 | 184,5 ( 40) |
| $M_2D_6$ | 8,4 | 18,37 | 202,0 ( 39,3) |

*) Lit.: W. Noll, Chemie und Technologie der Silicone, 2. Aufl., S. 216 und S. 238 (1968)

**T a b e l l e   2:** Diskrete Siloxanverbindungen

| Beispiele | Produkt | Stockpunkt nach DIN 51 556 ($^{o}$C) | Viskosität bei $-40^{o}$ C nach DIN 53211 ($mm^2/s$) | Dichte bei $-40^{o}$ C nach DIN 51757 ($kg/dm^3$) | Flammpunkt nach DIN 51755 ($^{o}$C) |
|---|---|---|---|---|---|
| 1 | 90 % $M_2D$ + 10 % $D_4$ | -110 | 3,3 | 0,893 | 44 |
| 2 | 90 % $M_2D$ + 10 % $D_5$ | -140 | 3,5 | 0,894 | 45 |
| 3 | 95 % $M_2D_2$ + 5 % $D_4$ | - 85*) | 5,4 | 0,917 | 58 |
| 4 | 90 % $M_2D_2$ + 10 % $D_5$ | -130 | 6,0 | 0,923 | 76 |
| 5 | 81 % $M_2D_2$ + 19 % $M_2D$ | -138 | 4,7 | 0,908 | 57 |

zum Vergleich die Kenndaten der Reinsubstanzen:

| | | | | | |
|---|---|---|---|---|---|
| | $M_2$ | - 68 | 1,67 | 0,826 | 0 |
| | $M_2D$ | - 86*) | 3,0 | 0,878 | 43 |
| | $M_2D_2$ | - 76*) | 5,4 | 0,910 | 65 |
| | $D_4$ | - 17,5*) | bei $-40^{o}$ C Feststoff | | 56 |
| | $D_5$ | - 38*) | bei $-40^{o}$ C Feststoff | | 70 |

*) Kristallisationspunkt

EP 0 370 316 B1

**T a b e l l e   3:** Diskrete Siloxanmischungen

| Beispiel | %M$_2$ | %M$_2$D | %M$_2$D$_2$ | %D$_4$ | %D$_5$ | Stockpunkt nach DIN 51556 ($^{0}$C) | Viskosität bei -40$^{0}$C nach DIN 53211 (mm$^2$/s) | Dichte bei -40$^{0}$C nach DIN 51757 (kg/dm$^3$) | Flammpunkt nach DIN 51755 ($^{0}$C) |
|---|---|---|---|---|---|---|---|---|---|
| 6 | - | 31 | 64,3 | 4,7 | - | -140 | 4,5 | 0,909 | 44 |
| 7 | - | 18,1 | 77,1 | 4,8 | - | -140 | 4,8 | 0,911 | 57 |
| 8 | - | 19 | 68,5 | 12,5 | - | - 60*) | 5,1 | 0,920 | 55 |
| 9 | - | 19 | 73,5 | 7,5 | - | -134 | 4,8 | 0,908 | 56 |
| 10 | - | 19 | 78,5 | 2,5 | - | -135 | 4,7 | 0,908 | 57 |
| 11 | - | 19 | 78,5 | - | 2,5 | -135 | 4,75 | 0,910 | 63 |
| 12 | - | 19 | 73,5 | - | 7,5 | -135 | 5,0 | 0,915 | 64 |
| 13 | - | 19 | 68,5 | - | 12,5 | -136 | 5,18 | 0,920 | 63 |
| 14 | - | 19 | 73,5 | 2,5 | 5 | -138 | 4,89 | 0,915 | 63 |
| 15 | - | 5,6 | 82,4 | 11 | 1 | -136 | 5,1 | 0,920 | 59 |
| 16 | 22,9 | 33,3 | 43,8 | - | - | < -140 | 3,12 | 0,880 | 21 |
| 17 | 20,6 | 30,0 | 39,4 | 10 | - | < -140 | 3,41 | 0,894 | 23 |
| 18 | 20,6 | 30,0 | 39,4 | - | 10 | < -140 | 3,46 | 0,894 | 22 |

*) Kristallisationsprodukt

EP 0 370 316 B1

EP 0 370 316 B1

**T a b e l l e 4:** Zum Vergleich: Statistische Siloxangemische

| Beispiel | %M₂ | %M₂D | %M₂D₂ | %D₄ | %D₅ | Stockpunkt nach DIN 51556 (°C) | Viskosität bei -40°C nach DIN 53211 (mm²/s) | Dichte bei -40°C nach DIN 51757 (kg/dm³) | Flammpunkt |
|---|---|---|---|---|---|---|---|---|---|
| 19 Baysilone-Öl M 3 | | | | | | -130 | 12,4 | 0,955 | 74 |
| 20 80 % Baysilone-Öl M 3 + 20 % M₂D | | | | | | -128 | 8,85 | 0,937 | 62 |
| 21 79,4 % Baysilone-Öl M 3 + 9,88 % M₂D + 10,7 % M₂ | | | | | | -134 | 7,67 | 0,931 | 34 |

## Patentansprüche

1. Salzfreie, alkoholfreie und halogenkohlenwasserstoffreie Kälteträgeröle niedriger Viskosität bei tiefen Temperaturen,
bestehend aus Gemischen von
5-95 Gew.-% linearem Decamethyltetrasiloxan ($M_2D_2$)

7

und mindestens einer der folgenden Komponenten:
0,1 bis 23 Gew.-% Hexamethyldisiloxan ($M_2$),
0,1 bis 20 Gew.-% Octamethyltrisiloxan ($M_2D$),
0,1 bis 15 Gew.-% Octamethylcyclotetrasiloxan ($D_4$),
0 bis 50 Gew.-% Decamethylcyclopentasiloxan ($D_5$)
sowie gegebenenfalls Farbstoffen
wobei die Summe der Komponenten des Gemisches 100 % beträgt.

2.  Verfahren zur Herstellung der Kälteträgeröle nach Anspruch 1, dadurch gekennzeichnet, daß dem durch Equilibrierung von Hexamethyldisiloxan und Hydrolyse-A-Öl gewonnenen Gemenge von kurzkettigen $\alpha,\omega$-Bis-(trimethylsiloxy)-dimethylsiloxanen und cyclischen Dimethylsiloxanen ein Teil des Hexamethyldisiloxans durch Destillation entzogen wird und das beanspruchte Siloxangemisch durch fraktionierte Destillation, gegebenenfalls durch weiteren Zusatz der Reinkomponenten, erhalten wird.

3.  Verwendung der Kälteträgeröle nach den Ansprüchen 1 oder 2 zum Kältetransport bis zu Temperaturen von -140°C.

## Claims

1.  Refrigerating oils free from salts, alcohols and halogenated hydrocarbons and having a low viscosity at low temperatures,
    consisting of mixtures of
    5 to 95% by weight of linear decamethyl tetrasiloxane ($M_2D_2$)
    and at least one of the following components:
    0.1 to 23% by weight of hexamethyl disiloxane ($M_2$),
    0.1 to 20% by weight of octamethyl trisiloxane ($M_2D$),
    0.1 to 15% by weight of octamethyl cyclotetrasiloxane ($D_4$)
    0 to 50% by weight of decamethyl cyclopentasiloxane ($D_5$)
    and optionally dyes,
    the sum of the components of the mixture being 100%.

2.  A process for the production of the refrigerating oils claimed in claim 1, characterized in that the hexamethyl disiloxane in a mixture of short-chain $\alpha,\omega$-bis-(trimethylsiloxy)-dimethyl siloxanes and cyclic dimethyl siloxanes obtained by equilibration of hexamethyl disiloxane and hydrolysis A oil is partly removed by distillation and the claimed siloxane mixture is obtained by fractional distillation, optionally by further addition of the pure components.

3.  The use of the refrigerating oils claimed in claim 1 or 2 for refrigeration at temperatures of down to -140°C.

## Revendications

1.  Huiles réfrigérantes (caloporteurs) sans sels, sans alcools et sans hydrocarbures halogénés, ces huiles ayant une faible viscosité à de basses températures,
    et consistant en des mélanges de :
    5 à 95 % en poids de décaméthyltétrasiloxane linéaire ($M_2D_2$)
    et d'au moins l'un des constituants suivants :
    0,1 à 23 % en poids d'hexaméthyldisiloxane ($M_2$),
    0,1 à 20 % en poids d'octaméthyltrisiloxane ($M_2D$),
    0 à 15 % en poids d'octaméthylcyclotétrasiloxane ($D_4$),
    0 à 50 % en poids de décaméthylcyclopentasiloxane ($D_5$),
    ainsi que, éventuellement, avec des colorants,
    la somme des constituants du mélange formant 100%.

2.  Procédé de production d'huiles réfrigérantes selon la revendication 1, procédé caractérisé en ce qu'on soumet le produit obtenu par mise en équilibre de l'hexaméthyldisiloxane et d'une huile d'hydrolyse A qui est un mélange d'$\alpha,\omega$-bis-(triméthylsiloxy)-diméthylsiloxanes à courte chaîne et de diméthylsiloxanes cycliques à un enlèvement par distillation d'une partie de l'hexaméthyldisiloxane et en ce qu'on obtient le mélange revendiqué des siloxanes par distillation fractionnée, éventuellement avec une addition supplémentaire des constituants purs.

3. Utilisation des huiles réfrigérantes (caloporteurs) selon les revendications 1 ou 2 pour le transport du nid jusqu'à des températures de -140°C.